# FASCICULE DE BREVET EUROPEEN

(11) **EP 1 052 892 B1**
(45) Date de publication et mention de la délivrance du brevet: **17.09.2003**
(21) Numéro de dépôt: 99901648.8
(22) Date de dépôt: 28.01.1999
(51) Int. Cl.: A01G 23/10, A01G 23/14

(54) **PROCEDE DE COLLECTE DES PRODUITS SECRETES PAR DES ARBRES ET POCHE DE COLLECTE POUR LA MISE EN OEUVRE DE CE PROCEDE**
VERFAHREN ZUM ERNTEN VON VON BÄUMEN AUSGESCHIEDENEN PRODUKTEN UND ERNTETÜTE ZUR DURCHFÜHRUNG DES VERFAHRENS
METHOD FOR COLLECTING PRODUCTS SECRETED BY TREES AND COLLECTING BAG FOR IMPLEMENTING SAID METHOD

(30) Priorité: 03.02.1998 FR 9801234
(43) Date de publication de la demande: 22.11.2000
(73) Titulaire: LES DERIVES RESINIQUES ET TERPENIQUES, F-40100 Dax (FR)
(72) Inventeur: BARRANX, Alain, F-40180 Oeyreluy (FR); DE LAPORTERIE, Vincent, F-40100 Dax (FR); DE LA SAUZAY, Bruno, F-40100 Dax (FR); LAUILHE, Jean-Paul, F-40990 Saint Paul lès Dax (FR); VIDAL, Alain, F-33000 Bordeaux (FR)
(74) Mandataire: Jacobson, Claude
(86) Numéro de dépôt international: FR9900173
(87) Numéro de publication internationale: WO99039565

(56) Documents cités:
- FR-A- 691 361
- FR-A- 725 773
- FR-A- 2 160 742
- FR-A- 2 746 582
- US-A- 3 304 654
- US-A- 3 601 925
- US-A- 3 959 925
- US-A- 4 291 492

## Description

La présente invention est relative à un procédé et un système de collecte de produits sécrétés par des arbres selon le préambule des revendications 1, 7 et 14, et se rapporte plus particulièrement à l'amélioration de la récolte de la gemme de pin, ou oléorésine, produite par les arbres résineux (par exemple : pinus pinaster, pinus eliottii, pinus sylvestris; pinus nigra, pinus pinea, pinus palustris, pinus edulis, pinus canariensis, pinus merkusii, pinus kashya, ...), lorsque l'on entaille leur écorce suffisamment profondément pour atteindre la surface du bois.

- L'écoulement de tels produits permet à l'arbre de se protéger contre ses agresseurs naturels (insectes, champignons, ...) en fabriquant une couche d'oléorésine qui se desséchera à l'air par évaporation de la partie volatile qu'elle contient, pour former une croûte qui permettra à l'écorce de se régénérer. Il se forme autour de l'entaille une zone très riche en canaux sécréteurs de cette oléorésine, surtout sur le haut de l'entaille du fait de l'écoulement gravitaire.

Les produits constituant l'oléorésine, monoterpènes et acide résiniques, présentent un intérêt très important pour l'industrie dans des domaines très. variés et très porteurs, comme la synthèse de matières premières pour parfums, encres, adhésifs ou autres.

L'invention vise à réaliser un procédé de collecte de la gemme susceptible de permettre d'obtenir ces produits à un prix concurrentiel par rapport aux matières premières d'origine pétrolière, sans porter atteinte à la qualité du bois des arbres.

En effet, les procédés utilisés actuellement ne conduisent qu'à une récolte partielle de l'écoulement, tant en laissant les canaux sécréteurs se boucher, qu'en laissant s'évaporer à l'air les produits volatils dont la valeur industrielle est très importante. De plus, les systèmes généralement utilisés mettent en place dans le bois des pièces métalliques dont la présence est préjudiciable pour l'industrie de découpe du bois.

Le document FR-A-725 773 décrit un procédé et un système de collecte selon le préambule des revendications 1, 7 et 14.

Dans les brevets FR 691,361 et FR 725,774, on décrit un procédé de récolte de sécrétions d'arbres utilisant un appareil mécanique manuel permettant de préparer l'arbre pour y apposer un système "clos" de récolte de l'oléorésine.

Le brevet FR 2 746 582 décrit un système de récolte en vase clos appliqué a la technique de gemmage manuel traditionnel, et de distillation pelliculaire de l'oléorésine sur le site de la récolte, dans un véhicule spécialement équipé.

Les brevets US 3 959 925 et US 4 291 492 décrivent des tracteurs possédant des systèmes mécanisés complexes à bras articulés permettent la réalisation des entailles dans l'écorce des arbres et l'application d'un activateur, mais d'après A.W. Hodges & W.D. Shoup (Naval Stores Review, 1988, juillet/août, pages 13-19), leur rentabilité est faible car directement liée à la dureté et la planéité du terrain d'exploitation et leur prix est élevé.

Dans de nombreux brevets, on décrit des systèmes d'activation de la sécrétion de l'oléorésine utilisant généralement l'acide sulfurique, comme le rappelle le Pr.G.Stephan dans Naval Stores Review, 1990, novembre/décembre, page 13. On citera par exemple le brevet FR 2 160 742 qui décrit une solution contenant de l'acide sulfurique et un lignosulfite.

L'invention vise à créer un procédé de collecte qui permette d'assurer un écoulement maximum de produit des canaux sécréteurs de l'arbre.

Elle vise en outre à créer un procédé de collecte permettant de limiter les interventions sur l'arbre, permettant à chaque personne d'opérer sur le plus grand nombre possible d'arbres par unité de temps, lors de la préparation de l'arbre par la réalisation d'une entaille de l'écorce et pour la récolte du produit, tout en évitant l'écorçage actuellement pratiqué en début de saison ainsi que la récolte du barras en fin de saison.

L'invention vise par ailleurs à créer un procédé qui permet de récupérer le maximum d'oléorésine écoulée et la plus pure possible pour éviter les traitements ultérieurs dont le coût est prohibitif.

Pour cela, la gemme doit être protégée, lors de son écoulement à la surface de l'arbre, vis-à-vis des griches (débris d'écorce, de branches, insectes, ...) et de l'eau de pluie qui entraîne les tanins présents dans l'écorce de pin.

De même, le procédé de l'invention vise à limiter les pertes par évaporation des essences (terpènes) dont la volatilité est suffisante pour diminuer considérablement le rendement de la récolte. Le procédé de l'invention vise également à permettre d'obtenir un produit de bonne qualité en limitant les phénomènes d'oxydation de l'oléorésine en présence de l'air, d'eau et des rayonnements ultraviolets émis par le soleil.

L'invention a donc pour objet un procédé de collecte selon la revendication 1.

L'invention a également pour objet un système de collecte selon les revendications 7 et 14. Des modes de réalisations préféres de l'invention sont décrits dans les revendications dépendantes.

L'invention sera mieux comprise à l'aide de la description qui va suivre, donnée uniquement à titre d'exemple et faite en se référant aux dessins annexés, sur lesquels :
- la Fig.1 est une vue en perspective d'un appareil de réalisation d'entailles dans un tronc d'arbre;
- la Fig.2 est une vue de dessous d'une fraise utilisée dans l'appareil de la figure 1;
- la Fig.3 est une vue en élévation de la fraise de la figure 2;
- la Fig.4 est une vue en perspective éclatée d'un premier mode de réalisation de moyens de collecte de la gemme suivant l'invention;
- la Fig.5 est une vue en élévation et en coupé d'un second mode de réalisation des moyens de collecte de gemme suivant l'invention; et
- la Fig.6 est une vue en coupe d'un autre mode de réalisation d'un appareil de réalisation d'entailles.

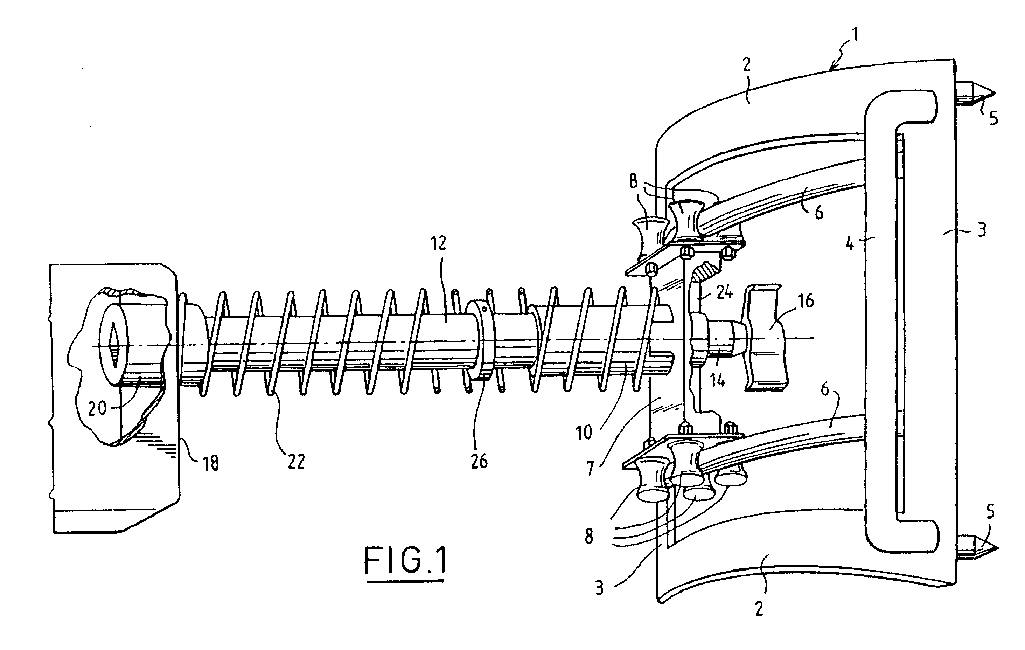

Sur la figure 1, on a représenté en perspective un appareil de réalisation d'entailles dans un tronc d'arbre, comprenant un châssis 1 en forme générale de cadre rectangulaire, comportant deux côtés 2 incurvés pour s'adapter à la courbure des troncs d'arbre et destinés par conséquent à être placés à peu prés horizontalement.

Les deux autres côtés 3 du châssis 1 sont rectilignes et portent chacun une poignée 4 de maintien du châssis sur le tronc à traiter.

Le châssis est pourvu de moyens de fixation temporaire à l'écorce du tronc d'arbre constitués dans le présent exemple par des pointes coniques 5 disposées aux quatre coins du châssis.

La conicité des pointes 5 est choisie pour permettre un enfoncement relativement aisé des pointes dans l'écorce du tronc et le maintien en place du châssis tout en permettant le retrait de l'appareil sans effort important.

Selon d'autres modes de réalisation, le châssis peut également être réalisé carré, triangulaire ou de forme arrondie, concave comme sur la figure 1 ou plan.

Le nombre de moyens de fixation peut être différent de quatre.

Un agencement à trois pointes coniques disposées à 120° par rapport au centre du châssis peut être avantageux.

Le matériau du châssis est choisi pour sa robustesse et sa légèreté. On peut par exemple réaliser le châssis en alliage léger ou en acier.

Dans l'espace délimité par le cadre rectangulaire du châssis sont disposés des rails tubulaires 6 dont l'inclinaison par rapport aux côtés incurvés 2 du châssis est-choisie en fonction de l'orientation de l'entaille à réaliser dans le tronc. Les rails 6 ont également une courbure correspondant à celle des côtés incurvés 2.

Sur les rails 6 est monté déplaçable un chariot 7 portant à chacune de ses extrémités deux trains de roues à gorges 8, qui enserrent un rail 6 correspondant et assurant ainsi le maintien du chariot sur les rails et son déplacement le long de ceux-ci.

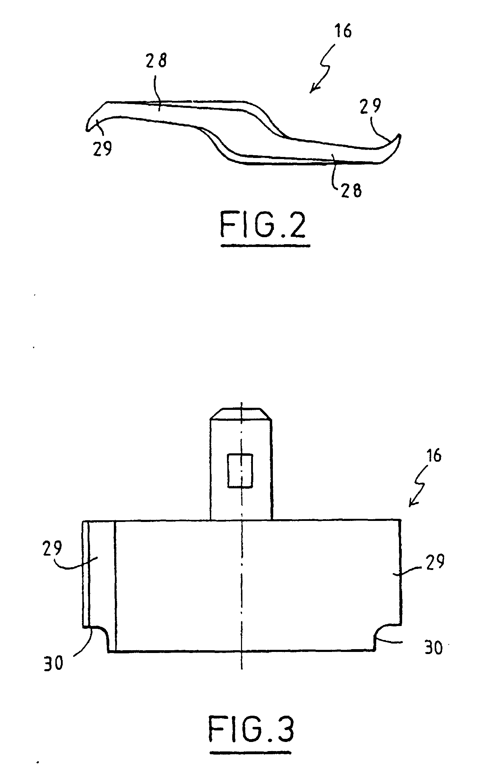

Sur le chariot 7 est monté un support de colonne tubulaire 10 dans lequel est montée à coulissement une colonne 12. Dans la colonne 12 est monté à rotation un arbre d'entraînement 14 qui porte à son extrémité proche du châssis un outil de coupe 16 constitué par une fraise qui sera décrite plus en détail en référence aux figures 2 et 3.

A son extrémité opposée au châssis 1, la colonne 12 porte un carter 18 de réception d'un moteur d'entraînement non représenté.

L'extrémité de l'arbre 14 débouchant dans le carter 18 porte un organe 20 d'accouplement avec l'arbre de sortie du moteur d'entraînement.

Ce moteur peut être un moteur électrique ou un moteur thermique.

Selon une variante, le moteur thermique peut être séparé de l'appareil et relié à celui-ci par un système de liaison flexible.

Entre le châssis 1 et le carter 18 est disposé autour du support de colonne 10 et de la colonne 12, un ressort hélicoïdal 22 de rappel de la colonne 12 et par conséquent de l'outil 16 en position inactive dans laquelle il est escamoté à l'intérieur d'un logement 24 ménagé dans le chariot 7.

La colonne 12 porte avantageusement un collier 26 réglable en position axiale et formant butée de limitation de la course de pénétration de l'outil dans le tronc de l'arbre.

En se référant maintenant aux figures 2 et 3, on voit que la fraise 16 est une fraise à deux dents 28 diamétralement opposées à tranchants 29 recourbés dans le sens de la rotation de la fraise et comportant à leur partie inférieure des évidements 30 clairement représentés à la figure 3. Les évidements 30 sont destinés à laisser un rebord de liber ou d'écorce sur le bord du fond de l'entaille.

Le profil de la fraise ainsi constitué permet d'obtenir une entaille avec un fond approprié et d'évacuer les copeaux d'écorce détachés lors de la réalisation de ladite entaille.

L'outil qui vient d'être décrit en référence aux figures 1 à 3 permet de réaliser dans un tronc d'arbre, soit une entaille circulaire de diamètre correspondant à celui de la fraise 16, soit une entaille de forme allongée de largeur correspondant au diamètre de la fraise 16 et de longueur déterminée par la course du chariot 7 le long de ses rails de guidage 6.

Il est également possible de se déplacer en oblique par rapport à la courbure du châssis pour faire varier la profondeur de l'entaille.

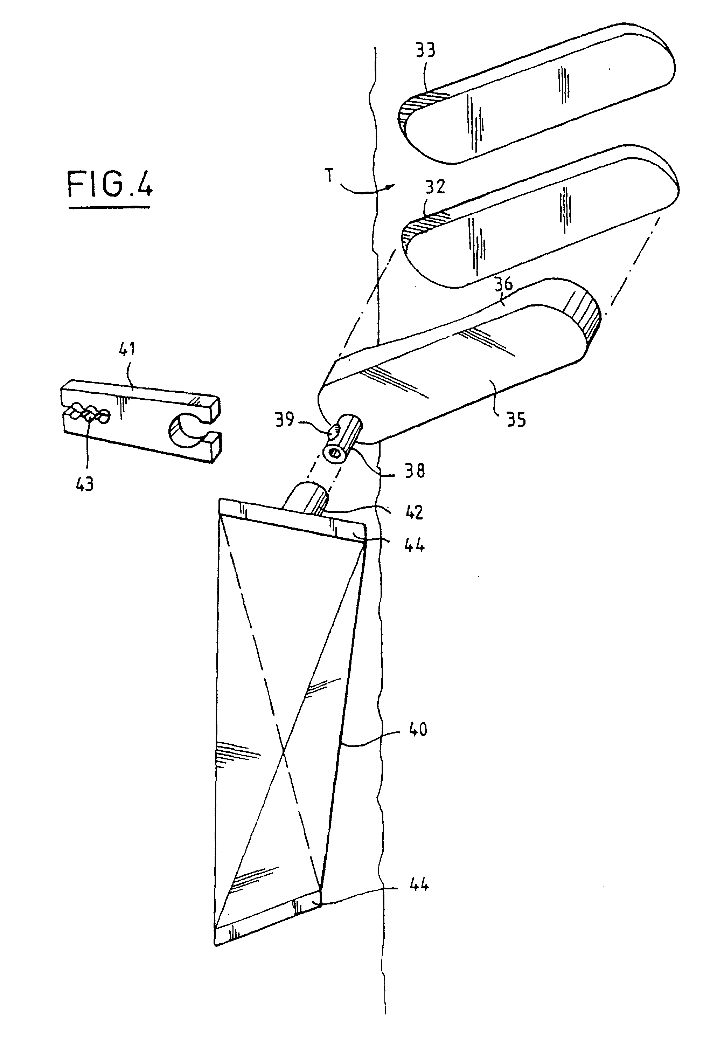

Deux entailles allongées du type précité sont représentées sur la figure 4 qui montre en vue éclatée les différents constituants du dispositif de collecte mettant en oeuvre le procédé de l'invention.

Les entailles 32,33 sont réalisées dans un tronc T à l'aide de l'appareil de la figure 1 après fixation de l'appareil sur le tronc à l'aide de ses pointes coniques 5, engagement de la fraise 16 entraînée en rotation dans l'écorce du tronc par déplacement axial de la colonne 12 à l'encontre de l'action du ressort de rappel 22, et ensuite par déplacement du chariot 7 le long des rails incurvés 6 sur une course correspondant à la longueur désirée de l'entaille.

Dans l'entaille 32 sur laquelle on a au préalable pulvérisé un produit activateur d'écoulement, on place une boîte collectrice 35 dont la forme correspond à celle de l'entaille.

La boîte 35 est enfoncée dans l'entaille 33 à la main ou de préférence avec un maillet jusqu'à ce quelle bute sur le liber.

La boîte collectrice est réalisée en matière plastique résistant à la gemme, par exemple en polypropylène, translucide ou opaque, ou en tout métal approprié tel que le zinc.

Elle comporte un bord 36 adapté à la courbure du tronc correspondant à la courbure choisie pour la forme du châssis 1 de l'appareil de la figure 1.

Selon un mode de réalisation particulier, la boîte lorsqu'elle est en matière plastique, est fabriquée par injection.

Par sa forme ou à l'aide d'une pièce métallique (non représentée), qui lui est ajoutée, elle assure l'étanchéité lors de l'écoulement de la gemme.

La boîte 36 est produite à partir d'un flux à bas point de fusion de polypropylène standard, par exemple : RD 369P de la société Borxalls.

Le matériau a été choisi en fonction des propriétés les plus importantes pour l'application envisagée telles que son module de flexion, sa dureté, sa durabilité et sa transparence.

Un stabilisant aux ultraviolets par exemple du Civrasorb 9441 de la société Ciba a été ajouté afin de prolonger la durée de vie des boites au soleil.

La boîte 35 comporte dans sa partie extérieure destinée à être engagée dans la partie basse de l'entaille 32, un tube d'écoulement 38 réalisé en la même matière que la boîte, en une seule pièce avec celle-ci. Le tube de dimensions appropriées, par exemple de 5 à 30 mm de diamètre et de quelques centimètres de longueur, laisse libre l'écoulement de la gemme par gravité.

Sur le tube 38 qui dans le présent exemple présente un bourrelet 39 venu de moulage avec le tube, est fixée une poche de collecte 40 en matière plastique.

La poche 40 comporte un embout rigide 42 soudé à la poche ayant une encoche non représentée, de réception du bourrelet 39 du tube d'écoulement 38.

La poche est réalisée en un matériau adapté au produit collecté.

Elle a une forme permettant un bon écoulement du produit collecté, par exemple une forme de berlingot ou à soufflets.

Elle est avantageusement fermée à ses deux extrémités par des soudures telles que 44.

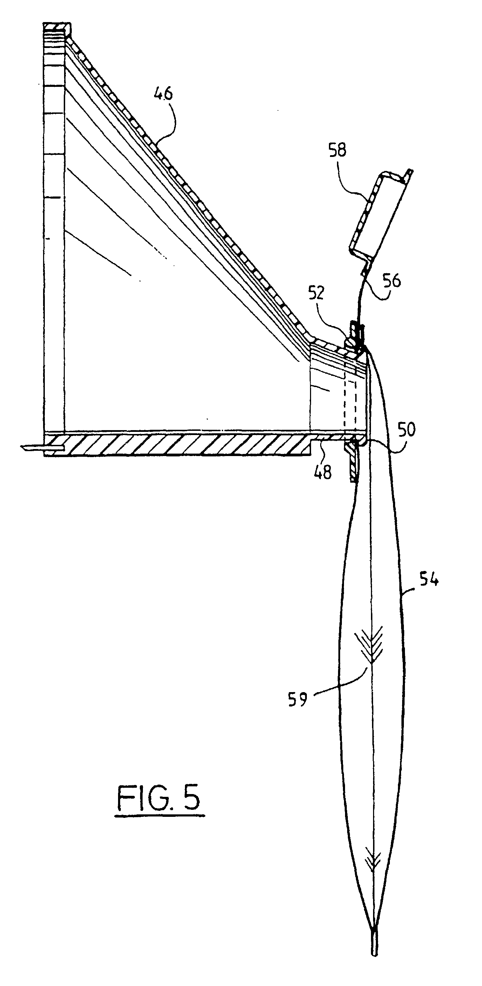

Le mode de réalisation représenté à la figure 5 comporte une boîte 46 en forme d'entonnoir, moulée par injection, destinée à une empreinte circulaire qui peut être réalisée à l'aide de l'appareil de la figure 1 sans déplacement de l'outil le long des guides 6 du châssis ou bien par un appareil similaire dépourvu de moyens de déplacement de l'outil transversalement au tronc.

Cette boîte comporte un tube d'écoulement 48 qui présente à son extrémité libre un petit bourrelet annulaire 50 de retenue d'un anneau rigide 52 soudé sur une poche de collecte 54 à laquelle est relié par une languette souple 56, un bouchon 58 destiné à la fermeture de la poche de collecte après son remplissage et son retrait du tube d'écoulement 48.

La poche est avantageusement réalisée en polypropylène.

Elle comporte de chaque côté des soufflets tels que le soufflet 59.

La fixation de la poche sur le tube d'écoulement peut être assurée par tous moyens de fixation comprenant une pièce rigide 41 clipsable par une extrémité sur la poche 40 placée sur le tube d'écoulement 38 et dont l'autre extrémité forme organe de fermeture 43 de la poche lorsqu'elle est pleine et retirée de la boîte.

La poche 54 est avantageusement initialement dépourvue d'orifice intérieur à l'anneau rigide 52. Elle est emboitée sur le tube d'écoulement 48 de la boîte d'écoulement 46 par perforation.

La poche utilisée suivant l'invention permet de protéger la gemme de tout polluant extérieur tel que débris d'écorce, insectes, de l'air et de l'eau, du fait que l'oléorésine est récupérée dans un système fermé.

Le procédé de collecte suivant l'invention est mis en oeuvre de la façon suivante.

On procède tout d'abord à la préparation de l'arbre.

Pour limiter le déplacement en forêt, il est envisagé selon ce procédé, de réaliser une, deux ou trois entailles par tronc d'arbre selon des orientations différentes autour de l'arbre.

Les entailles conformes à l'invention peuvent être de formes diverses comme par exemple allongées comme celles destinées à recevoir des boîtes du type décrit en référence à la figure 4, circulaires pour recevoir des boîtes telles que celle décrite en référence à la figure 5, rectangulaires, triangulaires, carrées et disposées, horizontalement, verticalement ou en oblique. La profondeur d'une entaille peut varier linéairement sur sa longueur ou avoir une forme convexe, concave, ou présenter des irrégularités prédéfinies.

Le procédé suivant l'invention permet de limiter dans le temps, l'intervention sur l'arbre en raison de l'absence de préparation de l'arbre avant la réalisation de l'entaille.

En effet, il n'est pas nécessaire de procéder à un écorçage.

De même, l'étape de récupération du barras en fin de saison est supprimée.

Pour augmenter la productivité de la préparation de l'arbre, cette opération se pratique en équipe de deux personnes, car elle implique la mise en oeuvre de deux fonctions successives séparées.

La première personne ou piqueur réalise l'entaille avec l'appareil décrit en référence à la figure 1 et la deuxième personne, le poseur, met en place sur cette entaille le dispositif permettant de recueillir la gemme avec un rendement maximal et une excellente pureté.

Le piqueur applique sur l'arbre non écorcé, à une hauteur comprise entre 0 et 200 cm du sol, l'appareil aisément transportable décrit en référence à la figure 1.

L'inclinaison des rails 6 de guidage du chariot 7, par rapport au châssis 1 permet de donner à l'entaille à réaliser, la forme et l'orientation désirées.

Le profil de la fraise 16 permet quant à lui de jouer sur la forme du fond de l'entaille et d'évacuer l'écorce.

Comme indiqué précédemment, le châssis est fixé temporairement au tronc de l'arbre par pénétration de ses pointes coniques 5 dans l'écorce de celui-ci, lesdites pointes assurant la fixation de l'appareil sur le tronc de l'arbre et permettant un retrait relativement aisé de cet appareil après la réalisation de l'entaille.

Une fois le châssis 1 appliqué contre le tronc, il est maintenu par les poignées 4 et la mise en route du moteur d'entraînement de l'arbre 14 portant la fraise 16, provoque la rotation de celle-ci et le déplacement de la colonne 12 par rapport au châssis 1 provoque la pénétration de la fraise 16 dans l'écorce du tronc et la réalisation d'une entaille de section circulaire. Le déplacement du chariot 7 portant l'outil le long des rails de guidage 6 du châssis 1 permet d'obtenir une forme d'entaille choisie, par exemple allongée, du type des entailles 32 et 33 allongées représentées à la figure 4.

Si nécessaire, un déplacement oblique par rapport au plan du châssis permet de faire varier la profondeur de l'entaille choisie.

Lorsque l'opération de réalisation d'une entaille est terminée, le ressort de rappel 22 assure le déplacement de la colonne 12 et par conséquent de la fraise 16 en translation par rapport au châssis et en fin de course, l'escamotage de la fraise 16 dans le logement 24 prévu dans le chariot 7.

La profondeur de l'entaille est fonction de chaque arbre, la fraise 16 entaillant le liber, mais s'arrêtant au contact du bois.

Le diamètre de perçage obtenu par la fraise est de 2 à 10 cm et peut avantageusement être compris entre 3 et 8 cm.

La courbure du châssis, c'est-à-dire la courbure de ces côtés incurvés 2, est de 15 à 40 cm de rayon afin de s'adapter aux formes et diamètres variés des troncs d'arbre.

Grâce à l'agencement de l'invention, l'outil 16 creuse une entaille de profondeur constante par rapport à l'écorce sur toute la longueur du déplacement de l'outil le long des rails de guidage 6 du chariot 7.

La rotation rapide de la fraise 16 ainsi que son profil particulier, assurent une évacuation efficace des copeaux d'écorce enlevés par celle-ci lors de la formation de l'entaille.

On obtient ainsi une entaille propre de forme choisie et très précise, en un temps très court, inférieur à 10 secondes, de préférence inférieur à 8 secondes.

L'appareil décrit en référence à la figure 1, est caractérisé par sa légèreté, son faible encombrement, sa rapidité d'exécution, la précision et la répétabilité de la forme des entailles réalisées, et sa simplicité.

En outre, cet appareil est ergonomique.

Grâce à la forme de la fraise 16 décrite en détail en référence aux figures 2 et 3, on obtient une découpe nette et propre des canaux secréteurs de gemme pour assurer un écoulement aisé de l'oléorésine.

Cet avantage ne peut être conservé dans le temps qu'en appliquant sur l'entaille, par exemple par pulvérisation, un produit évitant la cristallisation de la gemme et respectueux des tissus de l'arbre.

Le poseur applique ce produit sur la coupe supérieure de l'entaille, zone la plus productrice de gemme et en prévision des entailles ultérieures, réalisées au-dessus des précédentes.

Le poseur ferme aussitôt après le creux de l'entaille avec une boîte telle que la boîte représentée à la figure 4 ou celle représentée à la figure 5 selon la forme de l'entaille réalisée, à l'aide de l'appareil de la figure 1.

Comme indiqué plus haut, la boîte 35 ou 46, selon sa forme, est enfoncée à la main ou de préférence avec un maillet jusqu'à ce qu'elle bute sur le bois.

Une fois que la boîte est en place, on fixe sur celle-ci, une poche de collecte 40 dans le cas du mode de réalisation de la figure 4 ou une poche 54 dans le cas du mode de réalisation de la figure 5, la poche étant fixée sur le tube d'écoulement 38,48 correspondant et maintenue sur ce tube d'écoulement par les moyens décrits en référence aux figures 4 et 5.

On voit que grâce à l'agencement de l'invention, la pose du système de récupération de la gemme est simple et rapide, et se fait dans un temps équivalent à celui de la réalisation de l'entaille.

Suivant le procédé de l'invention, le piqueur et le poseur travaillent au même rythme, évitant les pertes de temps nuisibles à la rentabilité de la collecte de la gemme.

Le travail de l'équipe est répété trois ou quatre fois dans la saison, qui s'étale de mai à septembre en respectant un intervalle de quatre à six semaines environ entre chaque intervention.

Chaque nouvelle entaille est réalisée au-dessus de la précédente, en respectant un intervalle de 2 à 10 cm. Cet intervalle doit correspondre à la hauteur nécessaire pour que la limite d'action de l'activateur de l'entaille précédente apparaisse sur le bois.

Deux récoltes sont réalisées dans la saison, l'une après la deuxième entaille et l'autre après la dernière.

Les poches sont facilement récupérées sur les boîtes par une simple manipulation de retrait.

Chacune de ces poches est aussitôt fermée, par exemple en ce qui concerne la poche 54 du mode de réalisation de la figure 5 par son bouchon 58 ou encore à l'aide d'un clips 41 pour le mode de réalisation de la figure 4.

Les poches ainsi fermées sont stockées dans des fûts à ouverture totale (non représentés). Lorsque un fût est plein, il est fermé à l'aide d'un couvercle tenu par un cerclage et dirigé vers un site de récupération de la gemme.

Les poches récupérées suivant le procédé de l'invention sont aspergées ou placées dans un bain ou encore traitées à la vapeur pour nettoyer leur partie extérieure, souillée pendant leur séjour sur les arbres tels que les pins.

Les poches ainsi nettoyées peuvent être ouvertes pour procéder à la récupération de la gemme.

La gemme restant sur les poches est récupérée par une séparation de l'oléorésine par rapport aux parois de la poche, grâce à un échauffement entre 50°C et 90°C, et de préférence entre 60°C et 80°C, en suspendant les poches ouvertes.

La matière plastique des poches est choisie recyclable et comme indiqué plus haut, cette matière est avantageusement le polypropylène.

La gemme récupérée suivant le procédé de l'invention est prête à être utilisée industriellement.

La récotte de la gemme suivant l'invention ne laisse aucune pièce en matière plastique ou métallique néfaste à l'utilisation industrielle du pin. Le procédé suivant l'invention ne laisse sur l'arbre qu'une série de marques superposées sur une surface de 40 cm x 15 cm maximum, limitant les conséquences de l'intervention sur la qualité du bois.

### Exemple 1

Une expérimentation de récolte de gemme sur des pinus pinaster a été réalisée à l'aide d'un appareil dont le châssis en acier est de forme rectangulaire, de dimensions 25 x 35 cm, muni de deux poignées (figure 1). Ce châssis est concave, et son rayon de courbure est de 30 cm environ, correspondant à la taille moyenne des pins étudiés.

La face au contact de l'arbre est munie de pointes de longueurs différentes allant de 2 à 7 cm, de forme conique, et toutes parallèles entre elles.

Deux guides 6 épousant la forme du châssis permettent le déplacement contrôlé d'un outil mécanique constitué de la fraise 16 mise en rotation par un moteur électrique (non représenté). Le diamètre de la fraise est de 40 mm et sa forme est telle qu'elle lui permet après enlèvement de l'écorce, de déraper sur le bois sans l'attaquer. La fraise 16 peut se déplacer perpendiculairement au châssis en poussant la colonne porte-outil 12 vers l'arbre.

Le ressort de rappel 22 assure le retour de la fraise en position initiale lorsqu'on arrête la poussée.

Le poids total de l'appareil est de 6 kg. L'alimentation du moteur électrique est assurée par des batteries portées à la ceinture ou par un groupe électrogène disposé sur un véhicule tout terrain individuel utilisé pour le déplacement en forêt.

L'appareil a permis de réaliser des entailles de forme identique pour chaque arbre (figure 4) en déplaçant sur une longueur de 9 cm, une fraise de 4 cm de diamètre. Ce déplacement se fait suivant une inclinaison voisine de 10° par rapport à l'horizontale.

L'entaille est nettoyée simultanément par la rotation de l'outil 16. Lorsque le piqueur a fini ce travail, le poseur applique par pulvérisation un activateur dont les performances sont au moins égales à celles du SICAGEM décrit dans le brevet FR.2,160,742.

Le poseur met ensuite en place une boîte en polypropylène épousant parfaitement la forme de l'entaille et la courbure du fond. La boîte utilisée est translucide et munie d'un tuyau à sa partie basse (figure 4). Une poche en polypropylène à haute densité en forme de berlingot telle que la poche 40 est alors fixée sur la boîte grâce à un système de clips. Cette poche a une contenance de 1,5 litre et des dimensions de 20 cm de large sur 30 cm de haut.

L'équipe a ainsi préparé 300 arbres par jour en moyenne.

Une première poche est récoltée et refermée après la fin de la production de la deuxième entaille de la saison, une deuxième, en fin de saison sur la dernière entaille.

La collecte des poches se fait dans des fûts revêtus de 220 litres à ouverture totale. Il est récolté entre 1 et 2,5 litres de gemme par arbre.

Les fûts pleins sont fermés et dirigés vers le centre de traitement de la gemme.

Les poches fermées sont nettoyées à la vapeur puis coupées automatiquement pour être vidées par suspension au-dessus de récipients de collecte. L'opération est réalisée dans une enceinte chauffée à 60°C pour récupérer toute la gemme. La gemme ainsi récupérée contient 70% de colophane et 30% d'essence de térébenthine.

### Exemple 2

Identique à l'exemple 1 mais dans lequel l'appareil de réalisation d'entailles est entraîné par un moteur thermique placé dans le dos de l'utilisateur avec un hamais approprié et relié à la colonne porte-fraise par un système d'entraînement flexible (non représenté). Le poids du moteur est de 3 kg, et celui du châssis muni de la fraise est de 4,5 kg.

### Exemple 3

Identique à l'exemple 1 mais dans lequel le moteur de l'appareil de la figure 1 est un moteur thermique.

### Exemple 4

Identique à l'exemple 3 mais dans lequel le châssis de l'appareil est triangulaire, de 45 cm de côté.

### Exemple 5

Identique à l'exemple 1 mais dans lequel le châssis est de forme circulaire, de 20 cm de diamètre. La forme de l'entaille est circulaire d'un diamètre de 8 cm, et la fraise a un diamètre compris entre 4 et 8 cm. La forme de la boîte est identique à celle de l'entaille (figure 5).

### Exemple 6

Identique à l'exemple 1 mais dans lequel l'entaille est triangulaire de côté de 9 cm.

### Exemple 7

Identique à l'exemple 1 mais dans lequel la poche est rectangulaire à soufflets.

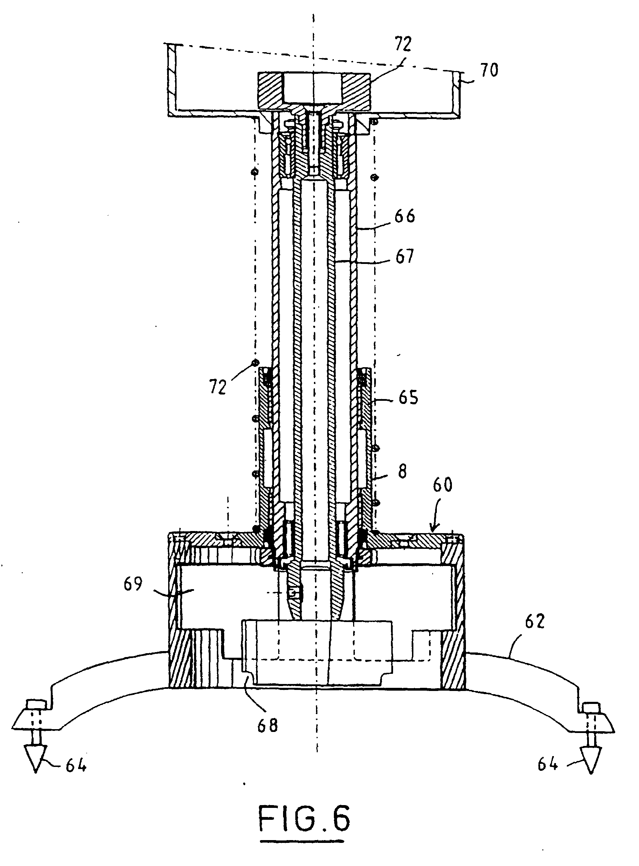

Dans l'exemple qui va suivre, on va mettre en oeuvre le procédé de l'invention en utilisant les moyens de collecte décrits en référence à la figure 5, mis en place sur une entaille de forme circulaire réalisée par exemple à l'aide d'un appareil représenté à la figure 6.

### Exemple 8

On réalise une entaille circulaire à l'aide de l'appareil représenté à la figure 6.

Cet appareil comprend un châssis 60 en forme de cloche pourvu à son extrémité ouverte de deux bras incurvés 62, diamétralement opposés, qui s'étendent symétriquement par rapport à la cloche 60 et qui portent des pointes coniques 64 de fixation de l'appareil par pénétration dans l'écorce d'un tronc.

La cloche 60 comporte un prolongement tubulaire axial 65 dans lequel est montée déplaçable axialement une colonne 66.

Dans la colonne 66, est monté à rotation un arbre 67 qui porte à son extrémité intérieure à la cloche 60, une fraise 68 du type décrit en référence aux figures 2 et 3.

A son extrémité opposée à la cloche 60, la colonne 66 porte un carter 70 de réception d'un moteur thermique d'entraînement non représenté.

Entre le carter 70 et la cloche 60, est disposé un ressort hélicoïdal de rappel 72 qui entoure la colonne et dont la fonction est la même que celle du ressort 22 de l'appareil de la figure 1.

La cloche 60 assure la protection de la fraise 68 lorsque celle-ci est escamotée en position inactive dans la cloche et est ajourée de lumières 69 pour assurer l'éjection des copeaux et poussières.

On voit donc que, comme dans l'appareil décrit en référence à la figure 1, la fraise 68 entraînée en rotation par le moteur thermique disposé dans le carter 70, par l'intermédiaire de l'arbre 67, pourvu à cet effet à son extrémité débouchant dans le carter 70, d'un organe d'accouplement 72, est également déplaçable axialement avec la colonne 66 à l'encontre de l'action du ressort de rappel 72 pour venir en contact avec l'écorce du tronc et réaliser dans celui-ci une entaille circulaire.

L'entaille ainsi réalisée a un diamètre de l'ordre de 8 cm.

## Revendications

1. Procédé de collecte de produits secrétés par des arbres notamment de la gemme du pin ou de l'oléorésine produite par des arbres résineux, ledit procédé comprenant une phase de réalisation dans le tronc de l'arbre d'une entaille (32,33) de profondeur suffisante pour atteindre la surface du bois, une phase de mise en place dans l'entaille d'une boîte (35;46) de forme correspondante munie dans sa partie extérieure basse d'un tube d'écoulement (38;48), une phase de fixation sur le tube d'écoulement (38;48) de la boîte (35;46), d'une poche (40;54) de collecte, une phase de retrait de la poche (40;54) de collecte une fois pleine de produit et une phase de récupération du produit contenu dans la poche (40;54) de collecte, le procédé de collecte étant **caractérisé en outre en ce que** la poche (40;54) est en une matière plastique résistant au produit collecté, et comprend en outre en combinaison une phase consistant à asperger l'entaille d'un produit activateur de l'écoulement du produit à recueillir, une phase de fermeture de la poche (40;54) de collecte pleine de produit et retirée, une phase consistant à stocker les poches (40;54) de collecte fermées dans un récipient, à fermer le récipient lorsqu'il est rempli de poches de collecte, à transporter le récipient fermé vers un site de récupération du produit, à traiter les poches (40;54) de collecte contenues dans un récipient pour nettoyer leurs parois extérieures souillées au cours de l'opération de collecte du produit, à ouvrir les poches (40;54) de collecte nettoyées, et ladite phase de récupération de produit.

2. Procédé suivant la revendication 1, **caractérisé en ce que** la mise en place de la boîte (35;46) est réalisée par enfoncement jusqu'à ce qu'elle bute sur le bois.

3. Procédé suivant l'une quelconque des revendications 1 et 2, de collecte de la gemme, **caractérisé en ce que** la poche de collecte (40;54) est en polypropylène.

4. Procédé suivant l'une quelconque des revendications 1 à 3, **caractérisé en ce que** la poche de collecte (40;54) est emboîtée sur le tube de la boîte par perforation et fixée audit tube.

5. Procédé suivant l'une quelconque des revendications 1 à 4, **caractérisé en ce qu'**après récupération du produit contenu dans les poches (40;54), celles-ci sont suspendues ouvertes et chauffées à une température comprise entre 50°C et 90°C en vue de la récupération des résidus de produit.

6. Procédé suivant la revendication 5, **caractérisé en ce que** la température de chauffage des poches (40;54) est de préférence comprise entre 60°C et 80°C.

7. Système de collecte de produits secrétés par un arbre, adapté à la mise en oeuvre du procédé de collecte de ceux-ci selon l'une quelconque des revendications 1 à 6, le système de collecte comportant une boîte (35:46) collectrice des produits ayant une forme déterminée destinée à être mise en place dans une entaille pratiquée dans l'arbre et de forme correspondante, la boîte (35;46) comportant dans sa partie extérieure basse un tube d'écoulement (38;48) des produits collectés,
le système de collecte étant **caractérisé en ce qu'**il comprend en outre une poche (40;54) de collecte en une matière plastique résistant au produit collecté, la poche (40) de collecte comportant un embout rigide (42) de placement sur le tube (38) d'écoulement,
le système de collecte comportant en outre une pièce rigide (41) clipsable par une extrémité sur l'embout rigide (42) pour fixer la poche (40) de collecte au tube (38) d'écoulement, l'autre extrémité de la pièce rigide (41) formant organe (43) de fermeture de la poche (40) de collecte.

8. Système de collecte selon la revendication 7, **caractérisé en ce que** l'embout rigide (42) de la poche (40) de collecte comporte une encoche de réception d'un bourrelet (39) prévu sur le tube (38) d'écoulement.

9. Système de collecte selon la revendication 7 ou 8, **caractérisé en ce que** la poche (40) de collecte est en polypropylène.

10. Système de collecte selon l'une quelconque des revendications 7 à 9, **caractérisé en ce que** la poche (40) de collecte a une forme permettant un écoulement des produits collectés.

11. Système de collecte selon la revendication 10, **caractérisé en ce que** la poche (40) de collecte a une forme de berlingot.

12. Système de collecte selon la revendication 10, **caractérisé en ce que** la poche (40) de collecte a une forme à soufflets.

13. Système de collecte selon l'une quelconque des revendications 7 à 12, **caractérisé en ce que** la poche (40) de collecte est fermée à ses deux extrémités par des soudures (44).

14. Système de collecte de produits secrétés par un arbre, adapté à la mise en oeuvre du procédé de collecte de ceux-ci selon l'une quelconque des revendications 1 à 6, le système de collecte comportant une boîte (35;46) collectrice des produits ayant une forme déterminée destinée à être mise en place dans une entaille pratiquée dans l'ombre et de forme correspondante, la boîte (35;46) comportant dans sa partie extérieure basse un tube d'écoulement (38;48) des produits collectés,
le système de collecte étant **caractérisé en ce qu'**il comprend en outre une poche (40;54) de collecte en une matière plastique résistant au produit collecté,
la poche (54) de collecte comportant un anneau rigide (52), le tube (48) d'écoulement comportant un bourrelet annulaire (50) de retenue de l'anneau rigide (52) pour fixer la poche (54) de collecte au tube (48) d'écoulement, un bouchon (58) de fermeture de la poche (54) de collecte étant relié à celle-ci par une languette souple (56), la poche (54) de collecte étant apte à être retirée du tube (48) d'écoulement.

15. Système de collecte selon la revendication 7, **caractérisé en ce que** la poche (54) de collecte est en polypropylène.

16. Système de collecte selon l'une quelconque des revendications 14 et 15, **caractérisé en ce que** la poche (54) de collecte a une forme permettant un écoulement des produits collectés.

17. Système de collecte selon la revendication 16, **caractérisé en ce que** la poche (54) de collecte a une forme à soufflets.

18. Système de collecte selon l'une quelconque des revendications 14 à 17, **caractérisé en ce que** la poche (54) de collecte est initialement dépourvue d'orifice intérieur à l'anneau rigide (52) et est apte à être emboîtée sur le tube (48) d'écoulement par perforation, pour la fixation de la poche (54) de collecte au tube (48) d'écoulement.

19. Système de collecte selon l'une quelconque des revendications 14 à 18, **caractérisé en ce que** la boîte (46) collectrice est en forme d'entonnoir pour une entaille circulaire pratiquée dans l'arbre.

## Patentansprüche

1. Verfahren zum Ernten von von Bäumen abgesonderten Produkten, insbesondere Kiefernharz oder Ölharz, das von harzhaltigen Bäumen erzeugt wird, wobei dieses Verfahren eine Phase der Herstellung eines Einschnitts (32, 33) in dem Baumstamm von ausreichender Tiefe, um die Oberfläche des Holzes zu erreichen, eine Phase des Einsetzens eines Kastens (35; 46) entsprechender Form, der in seinem unteren äußeren Teil mit einem Ablaufrohr (38; 48) versehen ist, in den Einschnitt, eine Phase der Befestigung eines Sammelbeutels (40; 54) an dem Ablaufrohr (38; 48) des Kastens (35; 46), eine Phase der Abnahme des mit Produkt gefüllten Sammelbeutels (40; 54) und eine Phase der Gewinnung des in dem Sammelbeutel (40; 54) enthaltenen Produkts umfaßt, wobei das Ernteverfahren außerdem **dadurch gekennzeichnet ist, daß** der Beutel (40; 54) aus einem gegenüber dem geernteten Produkt beständigen Kunststoff besteht und daß außerdem in Kombination eine Phase, die darin besteht, daß der Einschnitt mit einem das Fließen des zu erntenden Produkts aktivierenden Produkt besprüht wird, eine Phase der Verschließung des mit Produkt gefüllten und abgenommenen Sammelbeutels (40; 54), eine Phase, die darin besteht, daß die geschlossenen Sammelbeutel (40; 54) in einem Behälter gelagert werden, der Behälter geschlossen wird, wenn er mit Sammelbeuteln gefüllt ist, der geschlossene Behälter zu einem Ort der Gewinnung des Produkts befördert wird, die in dem Behälter enthaltenen Sammelbeutel (40; 54) behandelt werden, um ihre während des Arbeitsgangs des Ernten des Produkts verschmutzten Außenwände zu reinigen, und die gereinigten Sammelbeutel (40; 54) geöffnet werden, und die Phase der Gewinnung des Produkts umfaßt.

2. Verfahren nach Anspruch 1, **dadurch gekennzeichnet, daß** die Anbringung des Kastens (35; 46) durch Einstecken vor sich geht, bis er am Holz anstößt.

3. Verfahren nach einem der Ansprüche 1 und 2 zum Ernten von Harz, **dadurch gekennzeichnet, daß** der Sammelbeutel (40; 54) aus Polypropylen besteht.

4. Verfahren nach einem der Ansprüche 1 bis 3, **dadurch gekennzeichnet, daß** der Sammelbeutel (40; 54) auf das Rohr des Kastens durch Perforierung aufgesteckt und an diesem Rohr befestigt wird.

5. Verfahren nach einem der Ansprüche 1 bis 4, **dadurch gekennzeichnet, daß** nach Gewinnung des in den Beuteln (40; 54) enthaltenen Produkts diese Beutel offen aufgehängt und auf eine Temperatur zwischen 50°C und 90°C erhitzt werden, um die Produktrückstände zu gewinnen.

6. Verfahren nach Anspruch 5, **dadurch gekennzeichnet, daß** die Temperatur der Erhitzung der Beutel (40; 54) vorzugsweise 60°C bis 80°C beträgt.

7. System zum Ernten von von einem Baum abgesonderten Produkten, das für die Durchführung des Verfahrens zu deren Ernte nach einem der Ansprüche 1 bis 6 ausgelegt ist, wobei das Erntesystem einen Kasten (35; 46) zum Sammeln der Produkte umfaßt, der eine bestimmt Form besitzt und dazu bestimmt ist, in einen in dem Baum hergestellten Einschnitt von entsprechender Form eingesetzt zu werden, wobei der Kasten (35; 46) in seinem unteren äußeren Teil ein Rohr (38; 48) zum Ablaufen der geernteten Produkte aufweist, wobei das Erntesystem **dadurch gekennzeichnet ist, daß** es außerdem einen Sammelbeutel (40; 54) aus einem gegenüber dem gesammelten Produkt beständigen Kunststoff aufweist, wobei der Sammelbeutel (40) einen starren Ansatz (42) zur Anbringung an dem Ablaufrohr (38) aufweist,
wobei das Erntesystem ferner ein starres Teil (41) aufweist, das mit einem Ende auf den starren Ansatz (42) aufgeklemmt werden kann, um den Sammelbeutel (40) an dem Ablaufrohr (38) zu befestigen, wobei das andere Ende des starren Teils (41) ein Organ (43) zum Verschließen des Sammelbeutels (40) bildet.

8. Erntesystem nach Anspruch 7, **dadurch gekennzeichnet, daß** der starre Ansatz (42) des Sammelbeutels (40) einen Einschnitt zur Aufnahme eines auf dem Ablaufrohr (38) vorgesehenen Wulstes (39) aufweist.

9. Erntesystem nach Anspruch 7 oder 8, **dadurch gekennzeichnet, daß** der Sammelbeutel (40) aus Polypropylen besteht.'

10. Erntesystem nach einem der Ansprüche 7 bis 9, **dadurch gekennzeichnet, daß** der Sammelbeutel (40) eine Form besitzt, die ein Auslaufen der gesammelten Produkte gestattet.

11. Erntesystem nach Anspruch 10, **dadurch gekennzeichnet, daß** der Sammelbeutel (40) die Form einer Tetraedertüte hat.

12. Erntesystem nach Anspruch 10, **dadurch gekennzeichnet, daß** der Sammelbeutel (40) eine Balgenform hat.

13. Erntesystem nach einem der Ansprüche 7 bis 12, **dadurch gekennzeichnet, daß** der Sammelbeutel (40) an seinen beiden Enden durch Verschweißungen (44) geschlossen ist.

14. System zum Ernten von von einem Baum abgesonderten Produkten, das für die Durchführung des Verfahrens zu deren Ernte nach einem der Ansprüche 1 bis 6 ausgelegt ist, wobei das Erntesystem einen Kasten (35; 46) zum Sammeln der Produkte aufweist, der eine bestimmte Form besitzt und dazu bestimmt ist, in einen im Baum hergestellten Einschnitt von entsprechender Form eingesetzt zu werden, wobei der Kasten (35; 46) in seinem unteren äußeren Teil ein Rohr (38; 48) zum Ablaufen der gesammelten Produkte aufweist,
wobei das Erntesystem **dadurch gekennzeichnet ist, daß** es außerdem einen Sammelbeutel (40; 54) aus einem gegenüber dem gesammelten Produkt beständigen Kunststoff aufweist, wobei der Sammelbeutel (54) einen starren Ring (52) aufweist und das Ablaufrohr (48) einen ringförmigen Wulst (50) zum Zurückhalten des starren Rings (52), um den Sammelbeutel (54) an dem Ablaufrohr (48) zu befestigen, aufweist, wobei ein Stopfen (58) zum Verschließen des Sammelbeutels (54) mit diesem durch eine biegsame Zunge (56) verbunden ist und der Sammelbeutel dafür ausgelegt ist, von dem Ablaufrohr (48) abgezogen zu werden.

15. Erntesystem nach Anspruch 7, **dadurch gekennzeichnet, daß** der Sammelbeutel (54) aus Polypropylen besteht.

16. Erntesystem nach einem der Ansprüche 14 und 15, **dadurch gekennzeichnet, daß** der Sammelbeutel (54) eine Form besitzt, die ein Auslaufen der gesammelten Produkte gestattet.

17. Erntesystem nach Anspruch 16, **dadurch gekennzeichnet, daß** der Sammelbeutel (54) eine Balgenform besitzt.

18. Erntesystem nach einem der Ansprüche 14 bis 17, **dadurch gekennzeichnet, daß** der Sammelbeutel (54) anfangs am starren Ring (52) keine innere Öffnung aufweist und dafür ausgelegt ist, für die Befestigung des Sammelbeutels (54) am Ablaufrohr (48) auf das Ablaufrohr (48) durch Perforierung. aufgesteckt zu werden.

19. Erntesystem nach einem der Ansprüche 14 bis 18, **dadurch gekennzeichnet, daß** der Sammelkasten (46) bei einem im Baum hergestellten kreisförmigen Einschnitt die Form eines Trichters besitzt.

## Claims

1. Process for collecting products secreted by trees, notably pine resin or oleoresin produced by resinous trees, said process comprising a step of making a cut (32,33) in the trunk of the tree, deep enough to reach the surface of the wood, a step of placing a suitably shaped box (35,46) in the cut, provided at its lower end with a flow tube (38,48), a step of fixing a collecting pouch (40,54) to said flow tubes (38,48) of the box (35,46), a step of removing the collecting pouch (40,54) once it is full of product and a step of recovering the product contained in the collecting pouch (40,54), the collecting process being further **characterised in that** the pouch (40,54) is made of a plastic material resistant to the product being collected, and further comprises, in combination, a step of sprinkling the cut with a product that activates the flow of the product to be collected, a step of closing the collecting pouch (40,54) when it is full of product and removed, a step consisting of storing the sealed collecting pouches (40,54) in a container, closing the container once it is full of collecting pouches, transporting the closed container to a recovery site for the product, treating the collecting pouches (40,54) contained in a container in order to clean their outer surfaces which have become soiled with the product during the collecting operation, opening the cleaned collecting pouches (40,54), and said step of recovering the product.

2. Process according to claim 1, **characterised in that** the box (35,46) is put into position by pushing it in until it makes contact with the wood.

3. Process according to one of claims 1 and 2 for collecting resin, **characterised in that** the collecting pouch (40,54) is made of polypropylene.

4. Process according to any one of claims 1 to 3, **characterised in that** the collecting pouch (40,54) is fitted on to the tube of the box by perforation and fixed to said tube.

5. Process according to any one of claims 1 to 4, **characterised in that** after recovery of the product contained in the pouches (40,54) these pouches are suspended in an open state and heated to a temperature between 50 and 90°C in order to recover product residues.

6. Process according to claim 5, **characterised in that** the temperature for heating the pouches (40,54) is preferably between 60 and 80°C.

7. System for collecting products secreted by a tree, adapted to the use of the process for collecting said products according to any one of claims 1 to 6, the collecting system comprising a box (35,46) for collecting the products, having a specific shape, intended to be positioned in a correspondingly shaped cut made in the tree, the box (35,46) having at its lower end a flow tube (38,48) for the products collected,
the collecting system being **characterised in that** it further comprises a collecting pouch (40,54) made of a plastic material resistant to the product collected, the collecting pouch (40) comprising a rigid endpiece (42) for placing on the flow tube (38),
the collecting system further comprising a rigid part (41) which can be clipped at one end on to the rigid endpiece (42) to secure the collecting pouch (40) to the flow tube (38), the other end of the rigid part (41) forming a closure member (43) for the collecting pouch (40).

8. Collecting system according to claim 7, **characterised in that** the rigid endpiece (42) of the collecting pouch (40) comprises a notch for receiving a bead (39) provided on the flow tube (38).

9. Collecting system according to claim 7 or 8, **characterised in that** the collecting pouch (40) is made of polypropylene.

10. Collecting system according to any one of claims 7 to 9, **characterised in that** the collecting pouch (40) has a shape which allows the collected products to flow.

11. Collecting system according to claim 10, **characterised in that** the collecting pouch (40) is pyramid-shaped.

12. Collecting system according to claim 10, **characterised in that** the collecting pouch (40) is bellows-shaped.

13. Collecting system according to any one of claims 7 to 12, **characterised in that** the collecting pouch (40) is closed at both ends by weld seams (44).

14. System for collecting products secreted by a tree, adapted for carrying out the process for collecting these products according to any one of claims 1 to 6, the collecting system comprising a collecting box (35,46) for the products, having a specific shape adapted to be positioned in a suitably shaped cut made in the tree, the box (35,46) comprising at its lower end a flow tube (38,48) for the products collected,
the collection system being **characterised in that** it further comprises a collecting pouch (40,54) made of a plastic material resistant to the product collected,
the collecting pouch (54) comprising a rigid ring (52), the flow tube (48) comprising an annular bead (50) for retaining the rigid ring (52) in order to fix the collecting pouch (54) to the flow tube (48), a stopper (58) for closing off the collecting pouch (54) being attached thereto by a flexible tab (56), the collecting pouch (54) being capable of being removed from the flow tube (48).

15. Collecting system according to claim 7, **characterised in that** the collecting pouch (54) is made of polypropylene.

16. Collecting system according to either of claims 14 and 15, **characterised in that** the collecting pouch (54) is shaped to allow the collected products to flow.

17. Collecting system according to claim 16, **characterised in that** the collecting pouch (54) is bellows-shaped.

18. Collecting system according to any one claims 14 to 17, **characterised in that** the collecting pouch (54) initially has no opening inside the rigid ring (52) and is suitable for being fitted over the flow tube (48) by perforating it in order to secure the collecting pouch (54) to the flow tube (48).

19. Collecting system according to any one of claims 14 to 18, **characterised in that** the collecting box (46) is barrel-shaped for a circular cut made in the tree.
